# EUROPÄISCHE PATENTSCHRIFT

(11) **EP 1 069 286 B1**
(45) Veröffentlichungstag und Bekanntmachung des Hinweises auf die Patenterteilung: **30.08.2006**
(21) Anmeldenummer: 00113181.2
(22) Anmeldetag: 03.07.2000
(51) Int. Cl.: F01N 3/08, F01N 3/00, B01D 53/94, F01N 3/023, F01N 3/035

(54) **Abgasreinigungsvorrichtung für eine Brennkraftmaschine und Regenerationsverfahren für diese Vorrichtung**
Exhaust gas purification device for internal combustion engine and regeneration method of this device
Dispositif de purification de gaz d'échappement pour un moteur à combustion interne et procédé de régénération de ce dispositif

(30) Priorität: 14.07.1999 DE 19932790
(43) Veröffentlichungstag der Anmeldung: 17.01.2001
(73) Patentinhaber: Volkswagen Aktiengesellschaft, 38436 Wolfsburg (DE)
(72) Erfinder: Pott, Ekkehardt, Dr., 38518 Gifhorn (DE); Bosse, Rolf, Dr., 38440 Wolfsburg (DE)
(74) Vertreter: Meyer, Enno

(56) Entgegenhaltungen:
- EP-A- 0 758 713
- EP-A- 0 761 286
- EP-A- 0 766 993
- EP-A- 0 884 457
- WO-A-00/32911
- WO-A-89/03720
- "DERWENT" DERWENT, XP002900643

## Beschreibung

Die vorliegende Erfindung betrifft eine Abgasreinigungsvorrichtung für eine Brennkraftmaschine mit einem NOₓ-Speicherkatalysator und einen Partikelfilter sowie ein Regenerationsverfahren für eine solche Abgasreinigungsvorrichtung gemäß dem Oberbegriff des Anspruchs 7.

NOₓ-Speicherkatalysatoren dienen bei mager betriebenen Brennkraftmaschinen zur Speicherung der im Abgas enthaltenen Stickoxide, die bei intermittierenden Katalysatorregenerationen unter reduzierenden Bedingungen im fetten Abgas in unschädlichen Stickstoff umgewandelt werden. Hierbei wird der NOₓ-Speicherkatalysator gezielt entleert, damit er seine volle Absorptionsfähigkeit für Stickoxide zurückerhält, die mit zunehmender Stickoxidbeladung in der Magerphase kontinuierlich abnimmt. Durch den im Kraftstoff enthaltenen Schwefel werden jedoch an den katalytisch wirksamen Oberflächen stets auch stabile Sulfate gebildet, die zu einer schleichenden Vergiftung des Katalysators führen und dessen NOₓ-Einlagerungsfähigkeit allmählich verringern. Im Unterschied zu einer Bleivergiftung bei 3-Wege-Katalysatoren ist eine solche Sulfatvergiftung bei NOₓ-Speicherkatalysatoren jedoch reversibel, sofern hinreichend hohe Katalysatortemperaturen von mehr als etwa 550 °C und ein hinreichend hohes Schadstoffangebot bei geringem Restsauerstoffgehalt vorliegen.

Zur Gewährleistung einer stets ordnungsgemäßen Abgasreinigung wird daher in der Praxis durch Einstellung einer ausreichend hohen Katalysatortemperatur von mehr als etwa 550 °C und Absenkung des Sauerstoffgehaltes im Abgas, d.h. Verringerung des Lambda-Wertes, bei hinreichend hohem Schadstoffgehalt in periodischen Abständen eine Entschwefelung oder De-Sulfatierung des NOₓ-Speicherkatalysators durchgeführt. Der Lambda-Wert im NOₓ-Speicherkatalysator sollte hierbei unter 1,05, vorzugsweise jedoch unter 1,00 liegen, da eine De-Sulfatierung bei höheren Lambda-Werten mit einer zu geringen Reaktionsgeschwindigkeit erfolgen würde, was mit unerwünscht langen De-Sulfatierungszeiten verbunden wäre. Mit zunehmender Katalysatortemperatur beschleunigt sich die De-Sulfatierungsgeschwindigkeit überproportional.

Zur Steigerung der Katalysatortemperatur wird üblicherweise durch wirkungsgradmindernde und lasterhöhende Maßnahmen die Abgastemperatur angehoben, wobei zusätzlich die Exothermieerhöhung durch die Schadstoffumsetzung auf einem motornah angeordneten, merklich kleineren Vorkatalysator mit selektiv oder nicht selektiv oxidierender 3-Wege-Beschichtung ausgenutzt wird, der gleichzeitig auch noch für eine günstigere Abgaszusammensetzung sorgt. Der Vorkatalysator beschleunigt zudem das Anspringen des NOₓ-Speicherkatalysators und unterstützt die dort ablaufenden Sorptionsprozesse durch Begünstigung der Oxidation von NO zu NO₂. Ferner bildet er einen Puffer gegen kurzzeitige Abgastemperaturspitzen, die den hochtemperaturempfindlichen NOₓ-Speicherkatalysator schädigen könnten.

In der deutschen Patentanmeldung 198 50 757.7 wird vorgeschlagen, die erforderliche De-Sulfatierungstemperatur zumindest teilweise durch die Regeneration eines Partikelfilters, d. h. durch Abbrennen der dort gespeicherten Kohlenstoffmasse mit eventuell angelagerten Kohlenwasserstoffen, zu erzeugen. Der Partikelfilter wird dem NOₓ-Speicherkatalysator hierbei so vorgeschaltet, daß eine ausreichend gute Wärmekopplung gegeben ist. Zur Minimierung von Wärmeverlusten können die genannten Einzelbauteile dicht zueinander beabstandet in einem gemeinsamen Gehäuse untergebracht sein. Wegen der auftretenden Partikelemission ist dieses Verfahren insbesondere für mager betriebene Brennkraftmaschinen, wie z. B. Direkteinspritzer-Dieselmotoren geeignet. Die hohe Partikelfiltermasse führt jedoch zu einer Erhöhung der thermischen Trägheit, so daß nur ein Teil der beim Partikelabbrand entstehenden Energie tatsächlich zur Temperaturerhöhung des NOₓ₋Speicherkatalysatofs zur Verfügung steht. Überdies wird zur Vermeidung unkontrollierter Zündungen eine vergleichsweise häufige Partikelregeneration in Betracht gezogen, so daß die abbrennende Partikelmasse entsprechend klein und die frei werdende Energie dementsprechend gering ist.

Dokument EP-A-0766993 beschreibt einen Partikelfilter, der von Kanälen durchzogen ist, die wechselweise verschlossen sind. Dabei sind Wände der Kanäle porös ausgebildet und einlaßseitig bzw, einlaß- und auslaßseitig mit einer NOx-Speicherbeschichtung versehen. Ferner kann die Anordnung der NOx-Beschichtung direkt auf und in den Poren der porösen Wände erfolgen.

Dokument EP-A-0758713 beschreibt ein Regenerationsverfahren für eine mager betriebene Brennkraftmaschine mit allen Merkmalen des Oberbegriffs des Anspruchs 5.

Die Aufgabe der vorliegenden Erfindung besteht in der Schaffung einer einen Partikelfilter und einen NOₓ-Speicherkatalysator umfassenden verbesserten Abgasreinigungsvorrichtung, die eine möglichst optimale Ausnutzung der beim Partikelabbrand freiwerdenden Energie zur Aufheizung und De-Sulfatierung des NOₓ₋Speicherkatalysators ermöglicht und eine gleichmäßige und schnelle Regeneration der Abgasreinigungsvorrichtung zur Gewährleistung einer stets ordnungsgemäßen Funktionsweise und bestimmungsgemäßen Abgasreinigung gewährleistet. Die Aufgabe besteht auch in der Schaffung eines Regenerationsverfahrens für diese Abgasreinigungsvorrichtung, mit dem sich thermische Schädigungen des NOₓ₋Speicherkatalysators durch eine zu hohe Temperaturbelastung beim Partikelabbrand oder ein Sintern der Edelmetallkomponenten zuverlässig vermeiden lassen.

Die Aufgabe wird durch eine Abgasreinigungsvorrichtung für eine Brennkraftmaschine mit den Merkmalen des Anspruchs 1 sowie durch ein Regenerationsverfahren mit den Merkmalen des Anspruchs 5 gelöst. Bevorzugte Ausgestaltungen sind Gegenstand der abhängigen Ansprüche.

Dabei sind in der Abgasreinigungsvorrichtung der NOₓ-Speicherkatalysator und der Partikelfilter in einem gemeinsamen Trägerkörper integriert. Der Trägerkörper ist hierbei als Partikelfilter ausgebildet, der bereichsweise mit Washcoat, Edelmetall und NOₓ₋Speichersubstanz beschichtet ist. Die beschichteten Bereiche sind hierbei vorzugsweise jeweils gleichmäßig verteilt zueinander angeordnet. Der Trägerkörper kann jedoch vorzugsweise auch mehrere hintereinander, nebeneinander oder übereinander angeordnete schichtförmige alternierende Bereiche mit NOₓ-Speichersubstanz bzw. Partikelfiltermaterial umfassen.

Durch die erfindungsgemäße Kombination eines NOₓ-SpeiCherkatalysators und eines Partikelfilters in einer kombinierten Filter-Katalysator-Einrichtung mit entsprechend ausgebildeten Partikelfilter- bzw. Katalysatorbereichen ergibt sich eine optimale Wärmekopplung zwischen den einzelnen Bereichen, so daß die beim Partikelabbrand freiwerdende Energie ohne merkliche Wärmeverluste optimal zur Aufheizung der Katalysatorbereiche auf die erforderliche De-Sulfatierungstemperatur ausgenutzt wird und sich eine gleichmäßige und schnelle Regeneration des gesamten Trägerkörpers, d.h. der Partikelfitterbereiche und der NOₓ-Speicherkatalysatorbereiche ergibt.

Bei der periodischen Regeneration der Abgasreinigungsvorrichtung durch ein Regenerationsverfahren gemäß dem Oberbegriff des Anspruchs 5 wird der Partikelabbrand erfindungsgemäß durch eine Teil-Androsselung der zugeordneten Brennkraftmaschine und/oder eine Anpassung der Abgasrückführungsrate gesteuert und damit die Raumgeschwindigkeit und der O₂-Massenstrom während des Partikelabbrandes in weiten Grenzen gezielt beeinflußt. Nach Erreichen einer zur De-Sulfatierung geeigneten bestimmten Katalysatortemperatur wird der Partikelabbrand vorzugsweise durch Einstellen einer Betriebsweise mit geringem Sauerstoffkonzentrationen im Abgas von weniger als etwa 2 % gestoppt, die insbesondere bei prinzipiell rußemittierenden Dl-Dieselmotoren bis zum Auskühlen der Partikelfilterbereiche unter die Partikel-Zündtemperatur beibehalten wird. Durch die erfindungsgemäße Steuerung des Partikelabbrandes läßt sich eine eventuelle thermische Schädigung der hochtemperaturempfindlichen NOₓ-Speichersubstanz oder ein Sintern der Edelmetallkomponenten zuverlässig verhindern, so daß stets eine ordnungsgemäße Funktionsweise der Abgasreinigungsvorrichtung und eine Abgasreinigung innerhalb vorgegebener Zulässigkeitsgrenzen gewährleistet ist.

Weitere Einzelheiten, Merkmale und Vorteile der vorliegenden Erfindung ergeben sich nicht nur aus den zugehörigen Ansprüchen - für sich und/oder in Kombination - sondern auch aus der nachfolgenden Beschreibung bevorzugter erfindungsgemäßer Ausführungsbeispiele in Verbindung mit den zugehörigen Zeichnungen. In den Zeichnungen zeigen in schematischer Darstellung:
- Fig. 1: einen NOₓ-Speicherkatalysator mit vorgeschaltetem Partikelfilter nach dem Stand der Technik;
- Fig. 2: einen NOₓ-Speicherkatalysator mit Partikelfiltereigenschaften;
- Fig. 3: einen bereichsweise mit NOₓ-Speichersubstanzen beschichteten **Partikelfilter;**
- Fig. 4: einen Trägerkörper mit mehreren hintereinander angeordneten alternierenden vertikalen Schichten aus NOₓ-Speichersubstanz bzw. Partikelfiltermaterial; und
- Fig. 5: einen Trägerkörper mit mehreren übereinander angeordneten alternierenden horizontalen Schichten aus NOₓ-Speichersubstanz bzw. Partikelfiltermaterial.

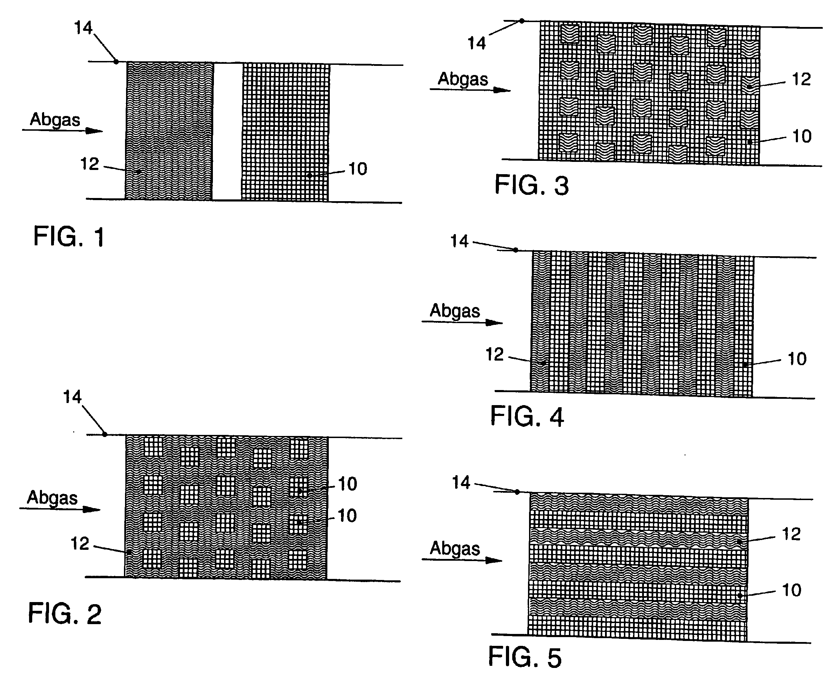

Fig. 1 zeigt eine einem nicht dargestellten mager betriebenen Motor, wie z. B. einen Direkteinspritzer-Dieselmotor nachgeschaltete Abgasreinigungsvorrichtung 10, 12 mit einem NOₓ-Speicherkatalysator 10 zur Speicherung von Stickoxiden und einem vorgeschalteten Partikelfilter 12 zur Verringerung der Partikelemission. Der Partikelfilter 12 ist hierbei im Abgasstrang 14 benachbart zu dem NOₓ-Speicherkatalysator 10 angeordnet, um unnötige Wärmeverluste zu vermeiden und die bei der Regeneration des Partikelfilters 12 freiwerdende Wärme möglichst optimal zur De-Sulfatierung des Katalysators 10 ausnutzen zu können. Zum Minimierung von Wärmeverlusten können der NOₓ-Speicherkatalysator 10 und der Partikelfilter 12 als separate Bauteile auch in einem (nicht dargestellten) gemeinsamen Gehäuse integriert sein. Der Abgasreinigungsvorrichtung 10, 12 ist ein (ebenfalls nicht dargestellter) motornah angeordneter Vorkatalysator vorgeschaltet.

Während des Motorbetriebes werden durch eine (nicht dargestellte) Einrichtung die Schwefelbeladung des NOₓ-Speicherkatalysators 10 und die Partikelbeladung des Partikelfilters 12 bestimmt und mit vorgegebenen Grenzwerten verglichen, die einem Absinken der katalytischen Aktivität, d.h. der NOₓ-Speicherfähigkeit, unter einen vorgegebenen Minimalwert bzw. einer nicht mehr tolerierbaren Wärmebelastung des Katalysators 10 beim Abbrennen der in dem Partikelfilter 12 gespeicherten Kohlenstoffpartikel entsprechen. Beim Unterschreiten eines dieser Grenzwerte wird automatisch die Regeneration des Partikelfilters 12, d.h. das Abbrennen der dort gespeicherten Kohlenstoffmasse eingeleitet, wobei der nachgeschaltete Katalysator 10 für eine hinreichend lange Zeit auf eine zur De-Sulfatierung geeignete Temperatur erhitzt und der eingelagerte Schwefel im wesentlichen in Form schwefelhaltiger Verbindungen, wie z. B. SO₂, freigesetzt wird. Die Katalysatoroberfläche erhält hierdurch ihre katalytische Wirksamkeit und ihre Fähigkeit zum Einlagern von Stickoxiden zurück.

Zur Steigerung der Reaktionsgeschwindigkeit, d.h. zur Verringerung der De-Sulfatierungszeit, wird der Motor oder die Brennkraftmaschine während einer solchen De-Sulfatierung im fetten Bereich betrieben und der Lambda-Wert durch ein geeignetes Motormanagement, wie z. B. Schließen einer Drosselklappe und Erhöhung der Einspritzmenge, auf einen Wert von weniger als 1 abgesenkt.

Fig. 2 zeigt ein Beispiel einer einem (nicht dargestellten) Vorkatalysator nachgeschalteten Abgasreinigungsvorrichtung, die einen als NOₓ-Speicherkatalysator ausgebildeten Trägerkörper 10 mit gleichmäßig verteilten Partikelfilterbereichen 12 umfaßt, die durch Modifikation der NOₓ₋Speichersubstratbeschichtung des Trägerkörpers 12 in Richtung auf höhere Partikelfilterraten gebildet werden.

Bei dem in Fig. 3 dargestellten zweiten erfindungsgemäßen Ausführungsbeispiel dient ein Partikelfilter 12 als Trägerkörper für gleichmäßig verteilte NOₓ₋Speichersubstratbereiche 10, die durch Beschichtung des Partikelfilters 12 mit Washcoat, Edelmetall und NOₓ-Speichersubstanz gebildet werden.

Die Abgasreinigungsvorrichtungen gemäß den Figuren 4 und 5 umfassen jeweils einen Trägerkörper 10, 12 mit mehreren alternierenden Schichten oder Platten aus NOₓ₋Speichersubstanz 10 bzw. Partikelfiltermaterial 12. In Fig. 4 sind die Schichten hintereinander angeordnet, während sie in Fig. 5 übereinander angeordnet sind. Die Schichten können jedoch auch nebeneinander angeordnet sein oder sich unter einem gewissen Winkel bezüglich der Vertikalen oder Horizontalen erstrecken. Es können auch unterschiedliche Ausführungsformen mit unterschiedlichen Anordnungen von NOₓ₋Speichersubstratbereichen 10 und Partikelfilterbereichen 12 in einem gemeinsamen Trägerkörper integriert sein.

Auch bei der erfindungsgemäßen Abgasreinigungsvorrichtung wird während des Motorbetriebs durch eine (nicht dargestellte) Einrichtung die Schwefelbeladung der NOₓ₋Speicherkatalysatorbereiche 10 und die Partikelbeladung der Partikelfilterbereiche 12 bestimmt und mit vorgegebenen Grenzwerten verglichen, die einer minimal zulässigen katalytischen Aktivität bzw. einer maximal zulässigen Partikelbeladung zur Gewährleistung einer stets ordnungsgemäßen Funktionsweise der Abgasreinigungsvorrichtung entsprechen. Bei Überschreitung eines dieser Grenzwerte wird durch Abbrennen der in den Partikelfilterbereichen 12 gespeicherten Kohlenstoffmasse automatisch die Regeneration dieser Bereiche eingeleitet, wobei die NOₓ-Speicherkatalysatorbereiche 12 für eine hinreichend lange Zeit auf eine zur De-Sulfatierung geeignete Temperatur erhitzt und durch Freisetzung des eingelagerten Schwefels regeneriert werden. Durch die Integration und die gleichmäßige Verteilung der NOₓ-Speicherkatatysatorbereiche 10 und der Partikelfilterbereiche 12 in einem gemeinsamen Trägerkörper 10, 12 ist die Wärmekopplung zwischen diesen Bereichen optimal, so daß unnötige Wärmeverluste entfallen und die beim Partikelabbrand freiwerdende Energie optimal ausgenutzt wird, was zu einer schnellen und gleichmäßigen Regeneration des gesamten Trägerkörpers 10, 12 führt.

Der Partikelabbrand läuft nach der Zündung bei hinreichend hohem O₂-Gehalt üblicherweise bis zur vollständigen Regeneration der Partikelfilterbereiche 12 ab. Je nach Raumgeschwindigkeit (Kühlungseffekt des durchströmenden vergleichsweise kühlen Abgases) können dabei jedoch u. U. sehr hohe Temperaturen auftreten, die zu einer thermischen Schädigung der hochtemperaturempfindlichen NOₓ-Speichersubstanz oder dem Sintern der Edelmetallkomponente führen können. Durch eine Teil-Androsselung des Motors und/oder eine Anpassung der Abgasrückführungsrate (EGR-Rate) wird daher der Partikelabbrand gesteuert und die Raumgeschwindigkeit sowie der O₂-Massenstrom in weiten Grenzen gezielt beeinflußt. Nach Erreichen der gewünschten De-Sulfatierungstemperatur wird der Partikelabbrand durch Übergang zu einem Betrieb mit niedrigen Abgassauerstoffkonzentrationen von weniger als 2 % vollkommen gestoppt. Diese Betriebsweise wird insbesondere bei rußemittierenden Dl-Ottomotoren bis zum Auskühlen des Partikelfilters unter die Partikel-Zündtemperatur fortgeführt.

## Patentansprüche

1. Abgasreinigungsvorrichtung für eine Brennkraftmaschine mit einem in einem Trägerkörper (10, 12) integrierten NOₓ-Speicherkatalysator (10) und einem Partikelfilter (12),
**dadurch gekennzeichnet, dass**
der Trägerkörper (10,12) als Partikelfilter ausgebildet ist und verteilt voneinander angeordnete Bereiche (10) zum Speichern von NOₓ und Bereiche (12) zum Filtern von Partikeln aufweist, wobei die NOx-Speicherbereiche (10) Zonen räumlicher Ausdehnung sind, die durch Beschichtung mit mit Washcoat, Edelmetall und NOₓ₋Speichersubstanz gebildet werden,

2. Abgasreinigungsvorrichtung nach Anspruch 1,
**dadurch gekennzeichnet, daß**
die beschichteten Bereiche (10 bzw. 12) gleichmäßig verteilt angeordnet sind.

3. Abgasreinigungsvorrichtung nach Anspruch 1, **dadurch gekennzeichnet,daß** die NOx-Speicherbereiche (10) und die Partikelfilterbereiche (12) alternierend angeordnet sind.

4. Abgasreinigungsvorrichtung nach Anspruch 3, **dadurch gekennzeichnet, daß** die alternierenden Bereiche (10, 12) schichtförmig ausgebildet sind.

5. Regenerationsverfahren für eine einer mager betriebenen Brennkraftmaschine nachgeschalteten Abgasreinigungsvorrichtung nach einemd er vorangegangenen Ansprüche mit einem NOₓ-Speicherkatalysator und einem Partikelfilter (12), bei dem in dem Partikelfilter (12) gespeicherte Kohlenstoffpartikel in bestimmten Zeitabständen zumindest teilweise abgebrannt werden und die freiwerdende Energie zur Erzeugung einer ausreichend hohen De-Sulfatierungstemperatur für den NOₓ₋Speicherkatalysator (10) ausgenutzt wird, und wobei der Partikelabbrand durch eine Teil-Androsselung der Brennkraftmaschine und/oder eine Anpassung der Abgasrückführungsrate gesteuert wird.
**dadurch gekennzeichnet, daß**
der Partikelabbrand nach Erreichen der De-Sulfatierungstemperatur durch einen Betrieb mit Abgassauerstoffkonzentrationen ≤ 2 % gestoppt wird.

6. Regenerationsverfahren nach Anspruch 5,
**dadurch gekennzeichnet, daß**
der Betrieb mit Abgassauerstoffkonzentrationen ≤ 2 % bis zum Auskühlen des Partikelfilters (12) unter die Partikel-Zündtemperatur fortgesetzt wird.

## Claims

1. Exhaust-gas purification apparatus for an internal combustion engine having an NOₓ storage catalytic converter (10) integrated in a support body (10, 12) and having a particulate filter (12), **characterized in that** the support body (10, 12) is formed as the particulate filter and has regions (10), arranged dispersed from one another, for storing NOₓ and regions (12) for filtering particulates, the NOₓ storage regions (10) being zones with a three-dimensional extent which are formed by coating with washcoat, precious metal and NOₓ storage substance.

2. Exhaust-gas purification apparatus according to Claim 1, **characterized in that** the coated regions (10 and 12) are distributed uniformly.

3. Exhaust-gas purification apparatus according to Claim 1, **characterized in that** the NOx storage regions (10) and the particulate filter regions (12) are arranged alternately.

4. Exhaust-gas purification apparatus according to Claim 3, **characterized in that** the alternating regions (10, 12) are in layer form.

5. Regeneration method for an exhaust-gas purification apparatus according to one of the preceding claims which is connected downstream of a lean-burn internal combustion engine and has an NOₓ storage catalytic converter and a particulate filter (12), in which carbon particulates stored in the particulate filter (12) are at least partially burnt up at defined time intervals and the energy which is released is utilized to generate a sufficiently high desulphating temperature for the NOₓ storage catalytic converter (10), and the particulate burn-off being controlled by partial throttling of the internal combustion engine and/or by adapting the exhaust-gas recirculation rate, **characterized in that** the particulate burn-off is stopped after the desulphating temperature has been reached, by operation with exhaust-gas oxygen concentrations of ≤2%.

6. Regeneration method according to Claim 5, **characterized in that** the operation with exhaust-gas oxygen concentrations ≤2% is continued until the particulate filter (12) cools to below the particulate ignition temperature.

## Revendications

1. Dispositif de purification des gaz d'échappement pour un moteur à combustion interne comprenant un catalyseur à accumulateur de NOx (10) et un filtre à particules (12) intégrés dans un corps porteur (10, 12), **caractérisé en ce que** le corps porteur (10, 12) est réalisé sous la forme d'un filtre à particules et présente des zones (10) pour accumuler le NOx et des zones (12) pour filtrer les particules disposées de manière répartie les unes par rapport aux autres, les zones d'accumulation du NOx (10) étant des zones étendues dans l'espace qui sont formées par revêtement avec un enduit de purification, un métal noble et une substance d'accumulation de NOx.

2. Dispositif de purification des gaz d'échappement selon la revendication 1, **caractérisé en ce que** les zones revêtues (10 ou 12) sont disposées en étant réparties uniformément.

3. Dispositif de purification des gaz d'échappement selon la revendication 1, **caractérisé en ce que** les zones d'accumulation du NOx (10) et les zones du filtre à particules (12) sont disposées en alternance.

4. Dispositif de purification des gaz d'échappement selon la revendication 3, **caractérisé en ce que** les zones alternées (10, 12) sont réalisées sous la forme de couches.

5. Procédé de régénération pour un dispositif de purification des gaz d'échappement selon l'une des revendications précédentes branché à la suite d'un moteur à combustion interne fonctionnant avec un mélange pauvre, comprenant un catalyseur à accumulateur de NOx (10) et un filtre à particules (12), avec lequel les particules de carbone accumulées dans le filtre à particules (12) sont brûlées au moins partiellement à intervalles donnés et l'énergie libérée est utilisée pour générer une température de désulfatation suffisamment élevée pour le catalyseur à accumulateur de NOx (10) et la combustion des particules est commandée par un étranglement partiel du moteur à combustion interne et/ou une adaptation du taux de retour des gaz d'échappement, **caractérisé en ce que** la combustion des particules est arrêtée après avoir atteint la température de désulfatation par un fonctionnement avec des concentrations d'oxygène dans les gaz d'échappement ≤ 2 %.

6. Procédé de régénération selon la revendication 5, **caractérisé en ce que** le fonctionnement avec des concentrations d'oxygène dans les gaz d'échappement ≤ 2 % se poursuit jusqu'au refroidissement du filtre à particules (12) au-dessous de la température d'allumage des particules.
